# FASCICULE DE BREVET EUROPEEN

(11) **EP 0 335 305 B1**
(45) Date de publication et mention de la délivrance du brevet: **03.11.1993**
(21) Numéro de dépôt: 89105400.9
(22) Date de dépôt: 28.03.1989
(51) Int. Cl.: B23K 9/32, B23K 9/02

(54) **Dispositif de formation d'une enceinte fermée à l'intérieur de deux tuyauteries métalliques à raccorder par soudage à l'arc sous gaz de protection**
Geschlossene Behälterformvorrichtung im Inneren zweier durch Schutzgaslichtbogenschweissen zu verbindender metallischer Rohrleitungen
Closed enclosure forming device inside two metal pipe works to be connected by shielding gas arc welding

(30) Priorité: 31.03.1988 FR 8804302
(43) Date de publication de la demande: 04.10.1989
(73) Titulaire: STEIN INDUSTRIE Société Anonyme dite:, F-78140 Vélizy Villacoublay (FR)
(72) Inventeur: Belleride, Paul, F-62640 Montigny en Gohelle (FR); Duhamel, Maurice, F-59350 Toufflers (FR)
(74) Mandataire: Weinmiller, Jürgen

(56) Documents cités:
- GB-A- 1 404 467
- US-A- 4 101 067

## Description

La présente invention concerne un dispositif de formation d'une enceinte fermée à l'intérieur de l'ensemble de deux tuyauteries métalliques à raccorder par soudage à l'arc sous gaz de protection, comprenant une première chambre à air torique en élastomère à l'intérieur de la première tuyauterie, une seconde chambre à air torique en élastomère à l'intérieur de la seconde tuyauterie, toutes deux gonflées jusqu'à obturer la tuyauterie correspondante, et portées chacune par un élément circulaire de support résistant à la différence de pression entre l'atmosphère ambiante et la pression interne désirée, percé d'un trou relié à un embout d'introduction ou d'évacuation d'un gaz de protection de l'envers du cordon de soudure.

Il est décrit dans le document GB-A-1404467 un dispositif de formation d'une enceinte fermée entre deux éléments de tuyauterie à raccorder par soudage à l'arc sous argon, comprenant deux éléments à pourtour gonflable en forme de chambre à air de pneumatique, portés chacun par une jante en acier, les deux jantes étant reliées rigidement l'une à l'autre par une barre, et percées de trous d'introduction ou d'évacuation de gaz dans l'enceinte. Un tel dispositif ne permet d'effectuer une soudure que sur des éléments de tuyauterie rectilignes dans le prolongement l'un de l'autre, est relativement lourd et ne permet pas d'observer l'envers du cordon de soudure, de sorte que l'on ne peut se rendre compte d'un défaut de la soudure qu'une fois l'opération terminée.

La présente invention a pour but de procurer un dispositif qui permette la formation d'enceintes de protection de la zone de soudage de tuyauteries métalliques de diamètres différents, même non rectilignes, qui soit relativement léger, de structure simple et peu coûteux, et le cas échéant qui permette au soudeur d'observer l'envers du cordon de soudure.

Le dispositif selon l'invention est caractérisé en ce que chaque élément circulaire de support est un disque collé sur le méridien équatorial interne de la chambre à air correspondante, et de diamètre suffisant pour rendre concave la zone de la chambre à air voisine de ce méridien équatorial interne, et en ce que les groupes d'une chambre à air et du disque collé à celle-ci sont mécaniquement indépendants l'un de l'autre.

Il répond en outre de préférence à au moins l'une des caractéristiques suivantes :
- le disque résistant à la différence de pression est collé par son bord de chaque côté sur une rondelle en élastomère, elle-même collée et vulcanisée sur la chambre à air torique au voisinage de son méridien équatorial,
- le disque résistant à la différence de pression est en un matériau transparent,
- le matériau transparent est du polyméthacrylate de méthyle,
- la ou les colles de jonction du disque avec la chambre à air sont résistantes à la chaleur,
Il est décrit ci-après, à titre d'exemple et en référence aux figures du dessin annexé, un élément de dispositif d'obturation d'une tuyauterie au voisinage de son extrémité à rabouter par soudage sur l'extrémité d'une autre tuyauterie.

La figure 1 représente l'élément d'obturation en élévation à l'intérieur de la tuyauterie.

La figure 2 est une demi-coupe selon l'axe II de la figure 1.

La figure 3 est une demi-coupe selon l'axe III de la figure 1, passant par la valve de gonflage de l'élément.

La figure 4 est une demi-coupe selon l'axe IV de la figure 1, passant par un embout d'introduction ou d'évacuation du gaz de protection de l'envers du cordon de soudure.

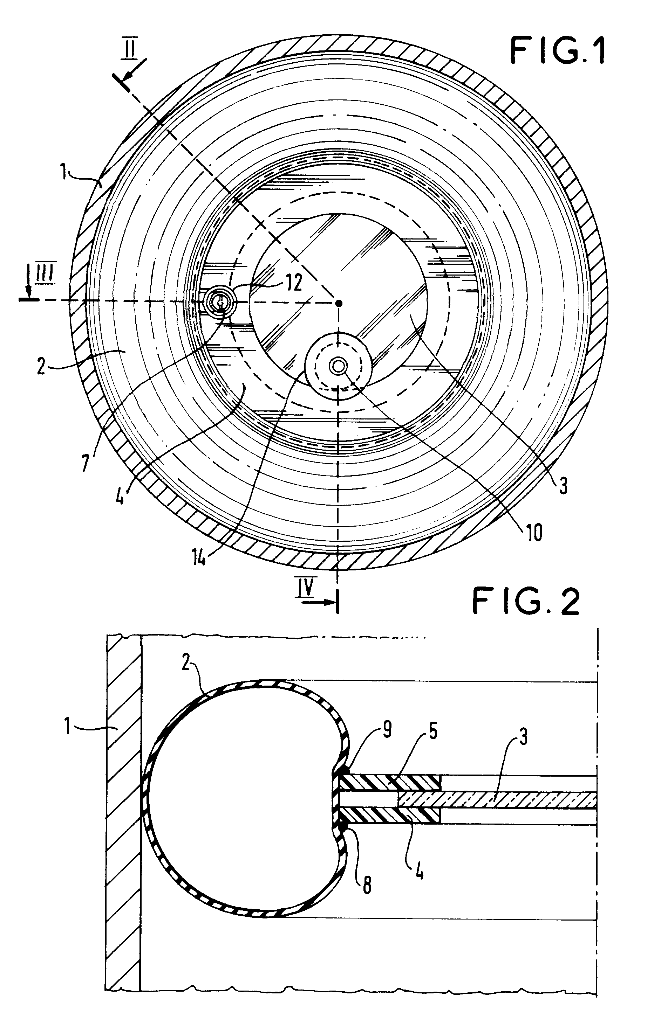

Dans les figures 1 et 2, l'élément d'obturation est disposé à l'intérieur de la tuyauterie 1. Son pourtour est constitué par une chambre à air torique pour automobile du commerce 2, munie d'une valve de gonflage 7.

La zone centrale est fermée par un disque 3 transparent en polyméthacrylate de méthyle, dont le bord est collé entre deux rondelles en élastomère 4, 5 par un adhésif résistant à la chaleur.

Les rondelles 4, 5 sont elles-mêmes collées sur la chambre à air, à proximité de son méridien équatorial interne, par des cordons 8, 9 de colle résistante à la chaleur. Le disque 3 est percé d'un trou 6 de passage du gaz de protection de l'envers du cordon de soudure, sur lequel est appliqué un embout 10.

La chambre à air vient s'appliquer par une zone de part et d'autre de son méridien équatorial externe sur la paroi interne de la tuyauterie, en assurant ainsi l'étanchéité. Sous l'effet de la pression, la zone interne de la chambre à air prend à proximité du disque central une forme légèrement concave.

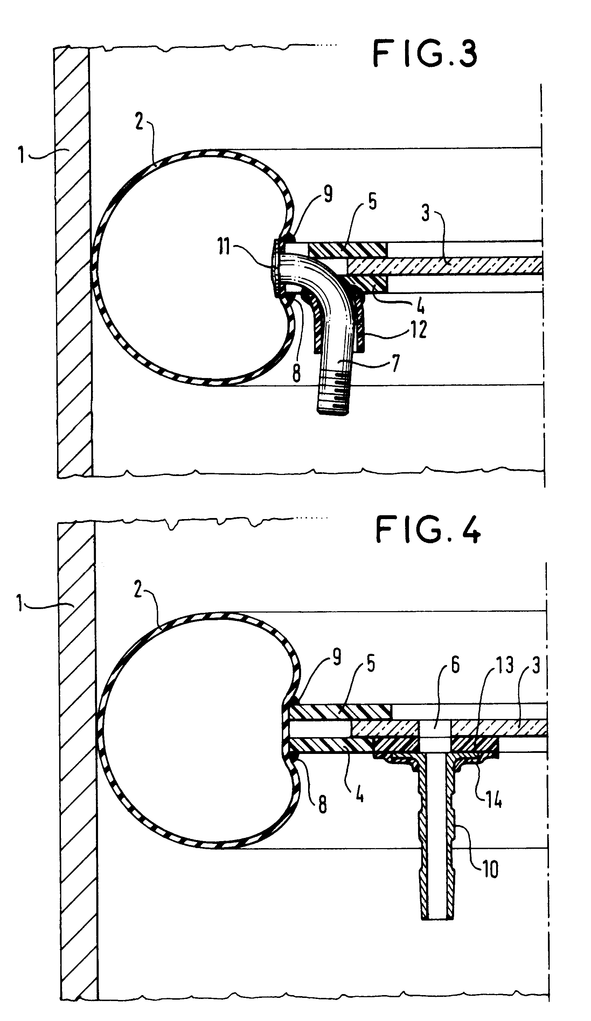

La valve 7 de gonflage de la chambre à air est représentée plus en détail en figure 3. Elle est reliée à un clapet de gonflage 11 et passe à travers la rondelle en élastomère 4 à l'intérieur d'une tubulure souple 12.

Dans la figure 4, l'embout cannelé en laiton 10 de passage du gaz de protection est fixé sur le disque 3, percé d'un trou en regard 6, par l'intermédiaire d'une rondelle de caoutchouc épaisse 13. Son pied est assujetti sur la rondelle 13 par une rondelle mince souple 14. La rondelle 13 est collée sur le pourtour du trou 6, et l'embout 10 et la rondelle souple 14 sont collés ensemble et sur la rondelle épaisse 13.

Le dispositif ci-dessus décrit permet d'isoler la zone de la tuyauterie 1 proche du cordon de soudure de l'atmosphère ambiante et d'y faire passer en débit réglable un gaz de protection de l'envers de la soudure, tel que de l'argon. Par ailleurs, le soudeur peut observer à travers le disque de polyméthacrylate de méthyle l'envers du cordon de soudure et vérifier sa pénétration et son aspect.

Dans le cas ou l'obturation des tuyauteries devrait avoir lieu assez près du cordon de soudure, il est possible de disposer un enduit réfractaire sur le pourtour de la chambre à air, dans la zone où elle vient au contact de la tuyauterie.

Si l'on doit effectuer des raboutages sur des tuyauteries de diamètre inférieur ou supérieur, sans être très différent, on peut utiliser le même dispositif en gonflant la chambre à air sous une pression plus faible ou plus élevée.

On a vérifié que l'on pouvait pratiquement assurer l'étanchéité à proximité d'une soudure de tuyauteries de diamètres allant de 220 mm à 1100 mm avec seulement un jeu de chambres à air de cinq dimensions différentes.

L'invention s'applique au soudage de tuyauteries rectilignes bout à bout, ou au soudage d'un piètement sur une tuyauterie ; on peut même l'appliquer à des tuyauteries coudées, en prévoyant le cas échéant la mise en place d'un câble permettant de dégonfler la chambre à air pour retirer le dispositif de fermeture de la tuyauterie dans la zone coudée.

## Revendications

1. Dispositif de formation d'une enceinte fermée à l'intérieur de l'ensemble de deux tuyauteries métalliques (1) à raccorder par soudage à l'arc sous gaz de protection, comprenant une première chambre à air torique en élastomère (2) à l'intérieur de la première tuyauterie, une seconde chambre à air torique en élastomère à l'intérieur de la seconde tuyauterie, toutes deux gonflées jusqu'à obturer la tuyauterie correspondante, et portées chacune par un élément circulaire de support résistant à la différence de pression entre l'atmosphère ambiante et la pression interne désirée, percé d'un trou (6) relié à un embout (10) d'introduction ou d'évacuation d'un gaz de protection de l'envers du cordon de soudure,
caractérisé en ce que chaque élément circulaire de support est un disque (3) collé sur le méridien équatorial interne de la chambre à air correspondante, et de diamètre suffisant pour rendre concave la zone de la chambre à air voisine de ce méridien équatorial interne, et en ce que les groupes d'une chambre à air et du disque collé à celle-ci sont mécaniquement indépendants l'un de l'autre.

2. Dispositif selon la revendication 1, caractérisé en ce que le disque (3) résistant à la différence de pression est collé par son bord de chaque côté sur une rondelle (4,5) en élastomère, elle-même collée et vulcanisée sur la chambre à air torique (2) au voisinage de son méridien équatorial.

3. Dispositif selon les revendications 1 ou 2, caractérisé en ce que le disque résistant à la différence de pression est en un matériau transparent.

4. Dispositif selon la revendication 3, caractérisé en ce que le matériau transparent est du polyméthacrylate de méthyle.

5. Dispositif selon l'une des revendications 1 à 4, caractérisé en ce que la ou les colles de jonction du disque avec la chambre à air sont résistantes à la chaleur.

## Claims

1. A device for forming an enclosure inside the assembly of two metal pieces of pipework (1) to be interconnected by arc welding under a protective gas, the device comprising a first toroidal air chamber (2) made of elastomer disposed inside the first piece of pipework, and a second toroidal air chamber made of elastomer disposed inside the second piece of pipework, both chambers being inflated so as to close the corresponding piece of pipework and being carried by a circular support element capable of withstanding the pressure difference between the ambient atmosphere and the desired internal pressure, said element being pierced by a hole (6) connected to an end piece for injecting or exhausting a protective gas into and out of the rear side of the weld bead, characterized in that each circular support element is a disk (3) glued along the inner equatorial meridian to the corresponding air chamber and having a diameter sufficient for giving the zone of the air chamber neighbouring said internal equatorial meridian a concave shape, and in that the groups constituted of an air chamber and the disk glued thereon are mechanically independent from one another.

2. A device according to claim 1, characterized in that the disk (3) withstanding the pressure difference is glued by its edge on both sides to respective elastomer washers (4, 5) which are in turn glued to and vulcanized on the toroidal air chamber (2) in the vicinity of its equatorial meridian.

3. A device according to claim 1 or 2, characterized in that the disk withstanding the pressure difference is made of transparent material.

4. A device according to claim 3, characterized in that the transparent material is polymethyl methacrylate;

5. A device according to anyone of the claims 1 to 4, characterized in that the, or each, glue for joining the disk and the air chamber is resistant to heat.

## Patentansprüche

1. Einrichtung zur Schaffung eines geschlossenen Bereichs im Inneren einer aus zwei durch Lichtbogenschweißung unter Schutzgas zu verbindenden metallischen Rohrleitungen (1) bestehenden Einheit, mit einer ersten torischen Luftkammer (2) aus Elastomermaterial im Inneren der ersten Rohrleitung, einer zweiten torischen Luftkammer aus Elastomermaterial im Inneren der zweiten Rohrleitung, wobei beide Kammern aufgeblasen werden, bis sie die entsprechende Rohrleitung verschließen, und wobei jede Kammer von einem kreisförmigen Stützelement getragen wird, das dem Druckunterschied zwischen der umgebenden Atmosphäre und dem gewünschten Innendruck standhält und ein Loch (6) aufweist, das an einen Stutzen (10) zum Einleiten bzw. Abführen eines Schutzgases zur bzw. von der Rückseite der Schweißnaht angeschlossen ist, dadurch gekennzeichnet, daß jedes kreisförmige Stützelement aus einer Scheibe (3) besteht, die entlang den inneren, äquatorialen Längskreis an die entsprechende Luftkammer angeklebt ist und einen Durchmesser besitzt, der ausreicht, um der dem inneren, äquatorialen Längskreis benachbarten Zone der Luftkammer eine konkave Form zu verleihen, und daß die Baugruppen, die aus einer Luftkammer und der an der Kammer festgeklebten Scheibe bestehen, voneinander mechanisch unabhängig sind.

2. Einrichtung nach Anspruch 1, dadurch gekennzeichnet, daß die dem Druckunterschied standhaltende Scheibe (3) mit ihrem Rand auf beiden Seiten an je eine Ringscheibe (4, 5) aus Elastomer angeklebt ist, die ihrerseits in der Nähe des äquatorialen Längskreises an der torischen Luftkammer (2) angeklebt und anvulkanisiert sind.

3. Einrichtung nach Anspruch 1 oder 2, dadurch gekennzeichnet, daß die dem Druckunterschied standhaltende Scheibe aus einem durchsichtigen Material besteht.

4. Einrichtung nach Anspruch 3, dadurch gekennzeichnet, daß das durchsichtige Material aus Polymethylmethacrylat besteht.

5. Einrichtung nach einem der Ansprüche 1 bis 4, dadurch gekennzeichnet, daß der bzw. die Verbindungskleber zwischen Scheibe und Luftkammer wärmebeständig sind.
